# EUROPEAN PATENT SPECIFICATION

(11) **EP 1 213 842 B1**
(45) Date of publication and mention of the grant of the patent: **09.06.2010**
(21) Application number: 01950001.6
(22) Date of filing: 17.07.2001
(51) Int. Cl.: H04N 7/16, H04B 1/16, H04M 11/08, H04N 5/445

(54) **PROGRAM PROVIDING SYSTEM**
PROGRAMMBEREITSTELLUNGSVORRICHTUNG
SYSTEME DE FOURNITURE DE PROGRAMME

(30) Priority: 18.07.2000 JP 2000217694
(43) Date of publication of application: 12.06.2002
(73) Proprietor: NTT DoCoMo, Inc., Tokyo 100-6150 (JP)
(72) Inventor: NAGAOKA, Tatsuji, Sapporo-shi, Hokkaido 002-8072 (JP); WAKAIZUMI, Mariko, Setagaya-ku, Tokyo 157-0062 (JP)
(74) Representative: HOFFMANN EITLE
(86) International application number: PCT/JP2001/006146
(87) International publication number: WO 2002/007334

(56) References cited:
- WO-A-00/04709
- WO-A-99/59334
- JP-A- 8 307 942
- JP-A- 9 037 180
- JP-A- 2000 069 381
- JP-A- 2000 078 280
- JP-A- 2000 175 117
- JP-A- 2000 183 836

## Description

### Technical Field

The present invention relates to a program providing system that receives program data broadcasted from a broadcasting station to provide a user with a program represented by the program data.

### Background Art

In WO 00/04709, there is described an interactive television program guide with remote access. The interactive television program guide is implemented on interactive television program guide equipment. A remote program guide access device is connected to the interactive television program guide equipment by a remote access link to provide a user with remote access to program guide functions.

In WO 99/59334, there is described a personal navigator system, in particular a hand-held device and system for monitoring and controlling electronic devices. A control device for monitoring and controlling the electronic devices may include a base unit including a microcontroller and an interface coupled to the microcontroller for receiving external information, and a personal navigator coupled to the base unit via a data link, the personal navigator further including a display component for displaying a dual partition selection list including at least a portion of the external information received from the interface, the dual selection list further including a first selection list and a second selection list, at least a portion of the first selection list and at least a portion of the second selection list being at least partly concurrently displayable on the display component.

A program providing system that consists mainly of a broadcast receiver (hereinafter referred to as a set-top box) that receives a ground-wave broadcast service or a satellite broadcast service an a television receiver and that provides a user with a program is becoming popular. In such a system, a user manipulates a remote controller of the set-top box or television receiver to select a broadcast channel assigned to a program the user wants to view.

On the other hand, a system is known in which a set-top box having a large-capacity storage device such as a hard disk is utilized to record a received program. Furthermore, a proposal has been made of the provision of a user interface which receives a broadcast program list representing a broadcasting schedule of programs at regular time intervals and deals with a request of a user for selection of a program or reservation for recording, on the basis of the broadcast program list.

In such a conventional system, all users of a set-top box can view all programs received by a set-top box. For example, if a family consists of four people, each user can obtain information received through a set-top box by other family members. As a result, for example a user who has not yet grown up can view adult programs. It is conceivable that the hardware of the set-top box is remodelled to prevent reception of such programs. In this case however, users who are allowed to view adult programs cannot view the programs. This is disadvantageous.

### Disclosure of Invention

The present invention has been made to overcome the above problem. An object of the present invention is to provide a program providing system which provides programs depending on a user.

According to the present invention, this object is achieved by a program providing system having the features of claim 1 and by a mobile phone having the features of claim 6.

In order to solve the above problem, a program providing system in accordance with the present invention comprises a broadcast receiver and a mobile terminal. The broadcast receiver receives image data and sound data of a program broadcasted from a broadcasting station, and provides a user with the program. The mobile terminal is accommodated by a mobile communication network. Identification information with which a user is identified is stored in a memory in the mobile terminal.

The mobile terminal transmits a control signal, which includes the identification information, to the broadcast receiver. The broadcast receiver stores the identification information and associated attribute information, receives the control signal from the mobile terminal, and acts based on the attribute information associated with the identification information included in the control signal.

In addition to the foregoing features, the mobile terminal may be designed to append the identification information to all control signals for transmission to the broadcast receiver. Moreover, the broadcast receiver may store the identification information and associated attribute information, receive a control signal from the mobile terminal, and provide a user interface according to the attribute information associated with the identification information included in the control signal.

Moreover, the broadcasting station may broadcast a broadcasting schedule which includes the attributes of the programs. The broadcast receiver may receive the broadcasting schedule. The user interface may not permit provision of a program whose attribute does not match the attribute information.

Furthermore, the broadcast receiver may transmit received program data to the mobile terminal. The mobile terminal may receive the program data sent from the broadcast receiver and provide a user with the program.

Herein, a communication between the broadcast receiver and mobile terminal may be carried out by radio.

Furthermore, the broadcast receiver may transmit information necessary to receive program data via the mobile communication network to the mobile terminal.

The mobile terminal may be able to communicate with the broadcasting station via the mobile communication network, receive the information sent from the broadcast receiver, and request the broadcasting station to transmit program data according to the information. A user is provided with a program represented by the program data sent from the broadcasting station in response to the request.

The broadcasting station may transmit program data to the mobile terminal responsive the request sent from the mobile terminal.

Herein, the amount of program data received by the mobile terminal may be smaller than that received by the broadcast receiver.

### Brief Description of the Drawings

Fig. 1 is a block diagram showing the configuration of a program providing system in accordance with an embodiment of the present invention;
Fig. 2 is a block diagram showing the configuration of a broadcasting station BC included in the program providing system in accordance with the present invention;
Fig. 3 is a conceptual diagram showing a program table TBL1 stored in a program storage unit BC1 within the broadcasting station BC;
Fig. 4 is a conceptual diagram showing a broadcast program table TBL2 stored in a program list storage unit BC2 within the broadcasting station BC;
Fig. 5 is a flowchart describing a minor program data downloading (BC) performed by the broadcasting station BC;
Fig. 6 is a block diagram showing the configuration of a set-top box STB included in the program providing system in accordance with the present embodiment;
Fig. 7 is a conceptual diagram showing an attribute information table TBL3 in an attribute information memory STB7 included in the set-top box STB;
Fig. 8 is a conceptual diagram showing a recording information table TBL4 in a recording unit STB2 included in the set-top box STB;
Fig. 9 is a flowchart describing a procedure of turning on or off the power supply of a television receiver TV performed by the set-to box STB;
Fig. 10 is a flowchart describing a procedure of recording a reserved program performed by the set-top box STB;
Fig. 11 is a flowchart describing a procedure of reproducing a recorded program performed by the set-top box STB;
Fig. 12 is a flowchart describing a procedure of minor program data downloading performed by the set-top box STB;
Fig. 13 is a block diagram showing the configuration of a mobile phone MS in the program providing system in accordance with the embodiment;
Fig. 14 is a conceptual diagram showing a minor program data table TBL5 present in the mobile phone MS;
Fig. 15 is a flowchart describing a procedure of minor program data downloading (STB) performed by the mobile phone MS;
Fig. 16 is a flowchart describing a procedure of minor program data downloading (BC) performed by the mobile phone MS;
Fig. 17 shows an example of an image displayed on the television receiver TV included in the program providing system in accordance with the present embodiment; and
Fig. 18 shows an example of a screen image displayed on the television receiver TV.

### Best Mode for Carrying Out the Invention

Referring to the drawings, an embodiment of the present invention will be described below.

### A: Configuration

To begin with, the configuration of the present embodiment will be described below.

### A-1: the configuration of a program providing system

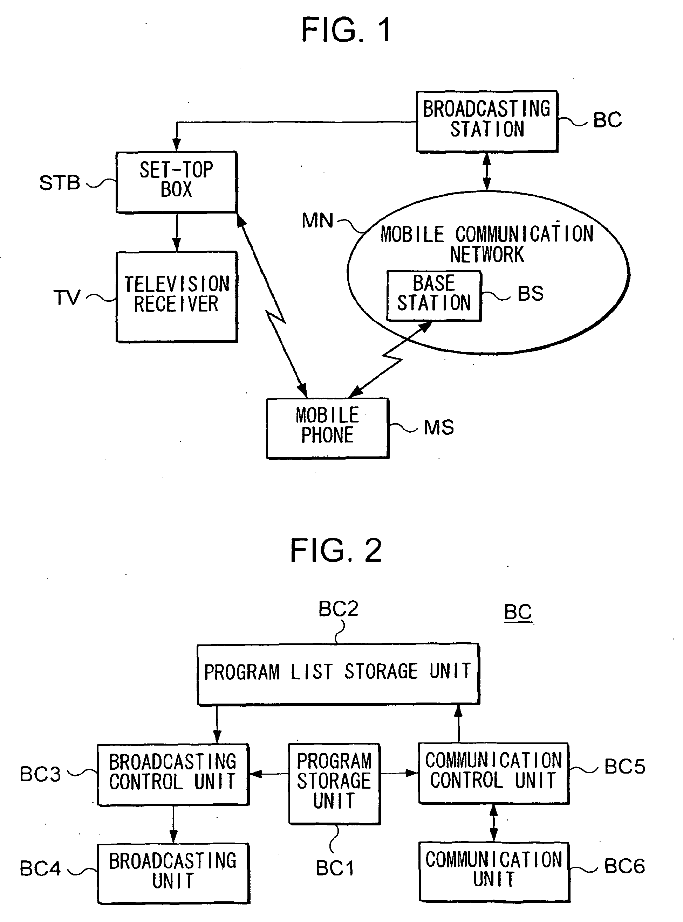

Fig. 1 is a block diagram showing the configuration of a program providing system in accordance with an embodiment of the present invention. Referring to Fig. 1, BC denotes a known broadcasting station that broadcasts programs. STB denotes a set-top box that receives a program broadcast from the broadcasting station BC. TV denotes a television receiver controlled by the set-top box STB. The broadcasting station BC is a ground-wave broadcasting station, a cable television broadcasting station that distributes programs over coaxial cables, a television broadcasting station that broadcasts programs via satellites, or a combination thereof. The set-top box STB has a function of receiving various kinds of data broadcasted from the broadcasting station BC. According to the present embodiment, the set-top box includes a large-capacity storage device such as a hard disk or a digital versatile disk (DVD)-random access memory (RAM). The television receiver TV is the same in function as a typical television set. According to the present embodiment, the on or off state of the power supply of the television receiver is controlled by the set-top box STB, and the television receiver and set-top box constitute a broadcast receiver.

Referring to Fig. 1, BS denotes a base station. MN denotes a known mobile communication network accommodating a plurality of base stations BS. MS denotes a mobile phone (mobile terminal) accommodated by the mobile communication network MN. The broadcasting station BC is connected onto the mobile communication network MN. The mobile phone MS can communicate with the broadcasting station BC via the mobile communication network MN. Furthermore, the mobile phone MS has the capability of a remote controller for the set-top box STB. A user uses the mobile phone MS to communicate with the broadcasting station BC via the mobile communication network MN, and remotely controls the set-top box STB.

### A-2: the configuration of the broadcasting station BC

Fig. 2 is a block diagram showing the configuration of the broadcasting station BC included in the program providing system in accordance with the present embodiment. Referring to Fig. 2, BC1 denotes a program storage unit in which program data, of programs to be broadcast, is stored. In the program storage unit BC1, the program data is stored in the form of a program table TBL1. BC2 denotes a program list storage unit in which a broadcast program list is stored for providing a broadcasting schedule of programs. In the program list storage unit BC2, the broadcast program list is stored in the form of a broadcast program list table TBL2.

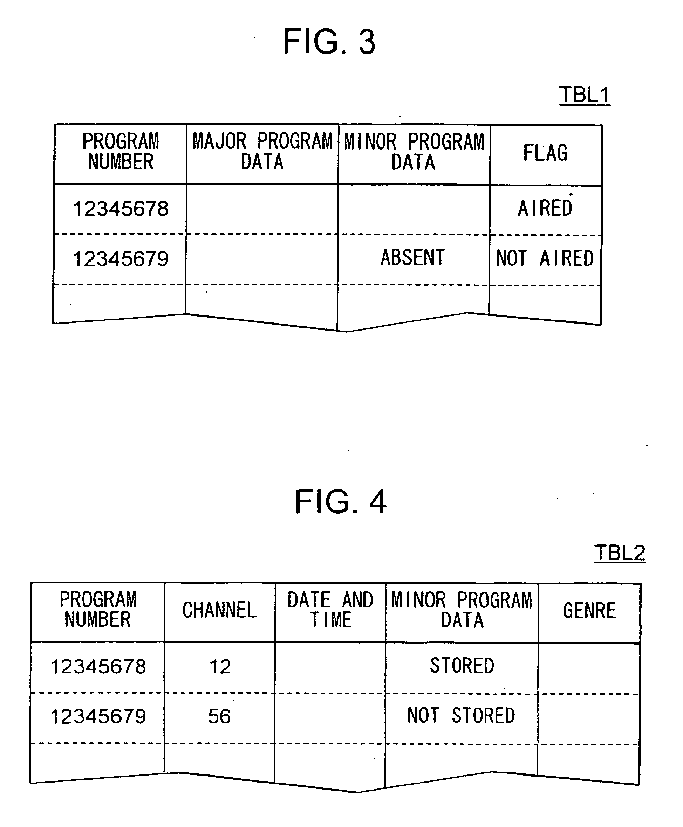

Fig. 3 is a conceptual diagram showing the program table TBL1 stored in the program storage unit BC1 in the broadcasting station BC. As illustrated, the program table TBL1 has a program number field for storing program numbers with which programs are identified, a field in which video data and sound data of programs (hereinafter referred simply to as program data) is stored, and a flag field in which flags are stored for indicating whether broadcasting of a program has already started (aired or not aired). The field in which program data is stored is divided into a major program data field in which major program data, that is, high-image quality and high-sound quality program data is stored, and a minor program data field in which minor program data, that is, text data representing the outline of a program or low-image quality and low-sound quality program data are stored. Namely, both the major program data and minor program data are prepared for one program. As for a program for which major program data alone is prepared but minor program data is not, the information (absent) signifying that no minor program data is present is stored in the minor program field.

Fig. 4 is a conceptual diagram showing the broadcast program list table TBL2 stored in the program list storage unit BC2 in the broadcasting station BC. As illustrated, the broadcast program table TBL2 has a program number field, a channel field, a date and time field, a minor program data field, and a genre field. Program numbers are stored in the program number field. Information indicating channels to be used to broadcast programs is stored in the channel field. Dates on which programs are broadcast are stored in the date and time field. Whether minor program data is present or absent is stored in the minor program data field. Types of programs (for example, adjust programs or education programs) are stored in the genre field.

Referring back to Fig. 2, BC4 denotes a broadcasting unit, and BC3 denotes a broadcasting control unit for controlling the broadcasting unit BC4. The broadcasting control unit BC3 reads major program data and minor program data from the program table TBL1 in the program storage unit BC1 according to a broadcast program list (broadcast program table TBL2) stored in the program list storage unit BC2. The broadcasting control unit BC3 performs predetermined processing on each program data, and transfers data that has been converted into a receivable data format, and a broadcast program list to the broadcasting unit BC4. The broadcasting unit BC4 receives the data and a broadcast program list.

BC6 denotes a communication unit that performs communications via the mobile communication network MN. BC5 denotes a communication control unit that controls the communication unit BC6. The communication control unit BC5 performs downloading of minor program data described below.

### A-2-1: minor program data downloading (BC)

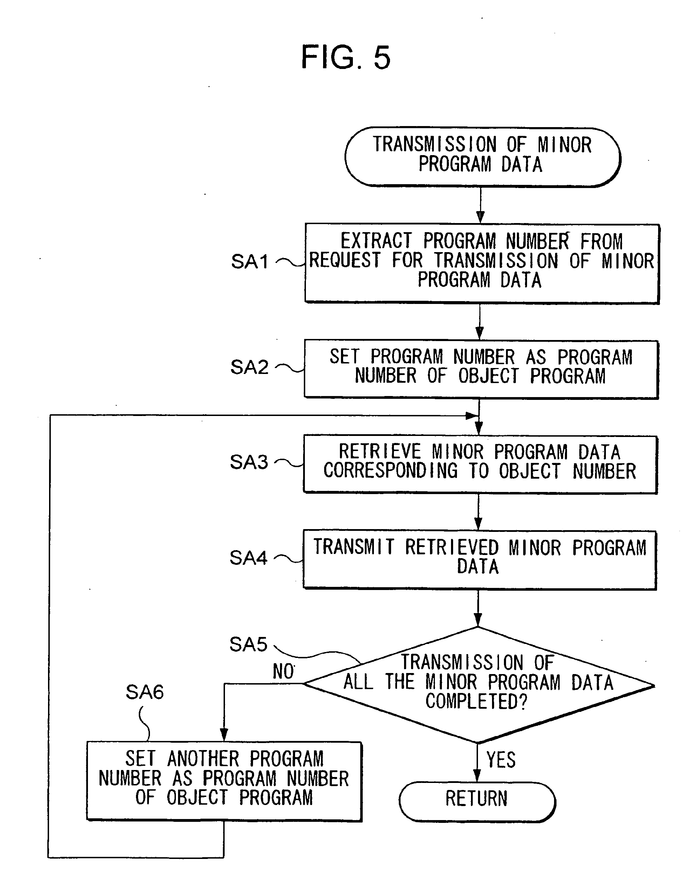

Fig. 5 is a flowchart describing a procedure of minor program data downloading (BC) performed by the broadcasting station BC. For this procedure, the communication control unit BC5 controls the communication unit BC6. In response to a request for minor program data downloading sent via the communication unit BC6, the communication control unit BC5 samples at least one program number from the request (step SA1), and performs steps SA3 and SA4 relative to each sampled program number.

At step SA3, the communication control unit BC5 reads from the program storage unit BC1 minor program data of a program specified with a program number of a program to be processed (step SA3). The communication control unit BC5 transmits back to the requester the combination of the minor program data and program number (step SA4). Minor program data downloading is completed when the processing of steps SA3 and SA4 has been performed on all programs specified by the request for minor program data downloading.

### A-3: the configuration of the set-top box STB

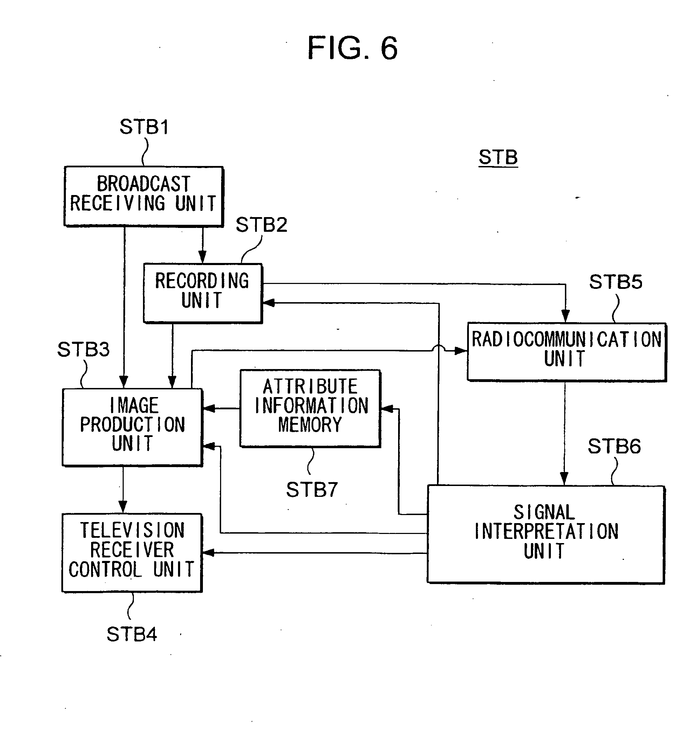

Fig. 6 is a block diagram showing the configuration of the set-top box STB in the program providing system in accordance with the present embodiment. Referring to Fig. 6, STB1 denotes a broadcast receiving unit for receiving major program data, minor program data, a program number, and a broadcast program list that are broadcasted from the broadcasting station BC. STB2 denotes a recording unit that stores the major program data, minor program data, program number, and broadcast program list, which are received by the broadcast receiving unit STB1. These data items can be updated. The recording unit STB2 selects major program data, minor program data, a program number, or a broadcast program list according to a user's instruction and outputs selected data. The broadcast program list stored in the recording unit STB2 is updated every time the broadcast receiving unit STB1 receives a new broadcast program list.

STB3 denotes an image production unit. The image production unit STB3 produces a screen image according to a user's instruction, a user's ID code, and user's attribute information, major program data, minor program data, a program number, and a broadcast program list that are received by the broadcast receiving unit STB1, and major program data, minor program data, a program number, and a broadcast program list that are transferred from the recording unit STB2. The user's ID code is information with which a user is identified. The attribute information represents user's attributes such as a user's address, a user's date of birth, and user's likes and dislikes.

STB4 denotes a television receiver control unit. The television receiver control unit STB4 causes the television receiver TV to display a screen image produced by the image production unit STB3, and controls the television receiver TV according to a user's instruction.

STB5 denotes a radiocommunication unit that communicates with the mobile phone MS. The radiocommunication unit STB5 transmits minor program data and a program number sent from the recording unit STB2 to the mobile phone MS, and transmits an instruction sent from the image production unit STB3 to the mobile phone MS. In addition, the radiocommunication unit STB5 receives a signal from the mobile phone MS. STB6 denotes a signal interpretation unit. The signal interpretation unit STB6 specifies a user's instruction according to a signal received by the radiocommunication unit STB5, and transfers the instruction to the units (recording unit STB2, image production unit STB3, and television receiver control unit STB4). However, when a signal received by the radiocommunication unit STB5 contains a user's ID code and attribute information, the attribute information is stored in association with the ID code in an attribute information memory STB7.

A user's ID code and attribute information are stored in the attribute information memory STB7. They can be updated. The user's ID code and attribute information are transmitted to the image production unit STB3.

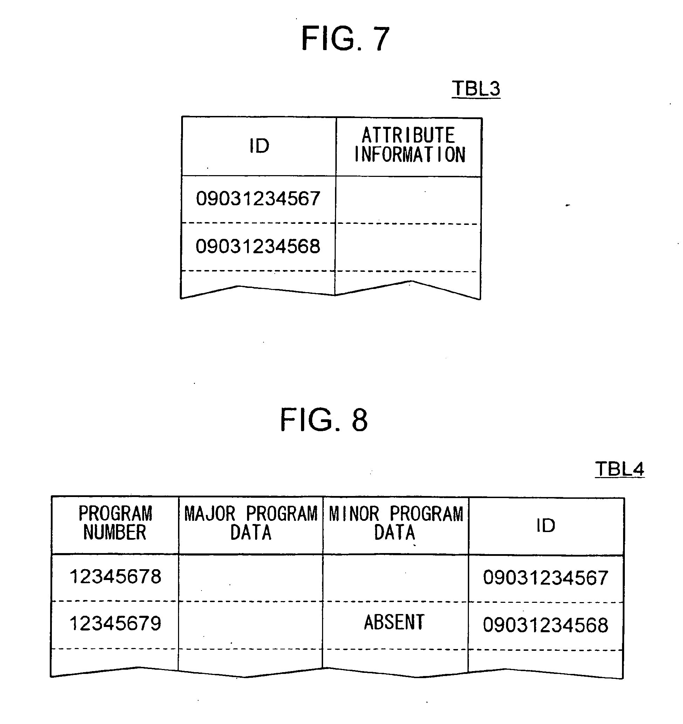

Fig. 7 is a conceptual diagram showing the attribute information table TBL3 stored in the attribute information memory STB7 incorporated in the set-top box STB. As illustrated, the attribute information table TBL3 has an ID field for storing ID codes, and an attribute information field for storing attribute information. In the attribute information table TBL3, it is not permitted to save the same value in the ID field.

Fig. 8 is a conceptual diagram showing the recording information table TBL4 in the recording unit STB2 incorporated in the set-top box STB. As illustrated, the recording information table TBL4 has a program number field, a major program data field, a minor program data field, and an ID field. Program numbers are stored in the program number field. Information representing locations in which major program data items are stored is stored in the major program data field. Information representing locations in which minor program data items are stored is stored in the minor program data field. ID codes for identifying users are stored in the ID field.

The table TBL4 is utilized as a table for storing reservations for recording. Nothing is stored in the major program data field corresponding to an unrecorded program.

In the major program data field and minor program data field, neither major program data nor minor program data is stored but information representing location of the data items is stored. This is because the present embodiment is devised on the assumption that a plurality of users, who each own different mobile phones MS, uses one set-top box STB to view programs. That is to say, a plurality of users shares one major program data (and minor program data) stored in the recording unit STB2. It saves the storage area in the recording unit STB2.

In the set-top box STB, the foregoing units work together to perform power supply on/off switching that is concerned with the television receiver TV, reserved program recording, recorded program reproduction, and minor program data downloading which will be described later.

### A-3-1: power supply on/off switching

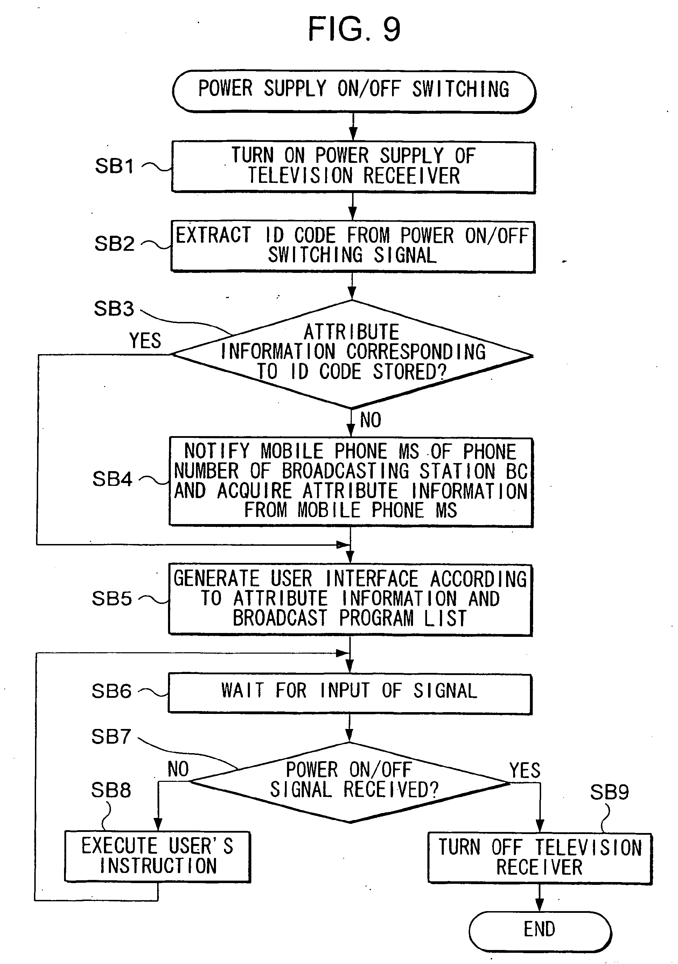

Fig. 9 is a flowchart describing a procedure of power supply on/off switching of the television receiver TV that is performed by the set-top box STB. First, when the power of the television receiver TV is off, the radiocommunication unit STB5 receives a power on/off switching signal. The signal interpretation unit STB6 interprets the signal and transmits to the television receiver control unit STB4 an instruction of switching on/off the power of the television receiver TV. Thus the television receiver control unit STB4 turns on the power of the television receiver TV (step SB1).

In addition, the signal interpretation unit STB6 extracts a user's ID code from the power on/off switching signal, and transfers the ID code to the image production unit STB3 (step SB2). The image production unit STB3 judges whether attribute information associated with the ID code is stored in the attribute information memory STB7 (step SB3). If the attribute information is stored, operation proceeds to step SB5. If not, a telephone number of the broadcasting station BC is notified to the mobile phone MS together with information indicating that no attribute information is stored. When the radiocommunication unit STB5 receives a reply signal from the mobile phone MS, the signal interpretation unit STB6 extracts an ID code and attribute information from the signal. The signal interpretation unit STB6 stores the attribute information in association with the ID code in the attribute information table TBL3 in the attribute information memory STB7 (step SB4). The telephone number of the broadcasting station BC is stored in advance in the set-top box STB.

At step SB5, the image production unit STB3 provides a user interface according to major program data sent from the broadcast receiving unit STB1, the contents of the recording unit STB2, a user's ID code, and user's attribute information (step SB5). The user interface is user for controlling the components of the set-top box STB. A user enters an instruction in the user interface, so that desired processing among real-time viewing of a program, recording, reservation for recording, reproduction, and minor program data downloading are executed.

The user interface is a graphical user interface. Viewing an interactive screen image displayed on the television receiver TV, a user manipulates the mobile phone MS to enter an instruction into the user interface. The functions provided by the image production unit STB3 are restricted through the user interface based on a user's ID code and attribute information. For example, when real-time viewing is designated, a program selection screen image is displayed on the television receiver TV according to a broadcast program list. However, programs that do not match a user's attribute information are not displayed. It is therefore impossible to download minor program data of a program which does not match the user's attribute information to the user's mobile phone MS. When reproduction of a recorded program, management of reservations for recording, or downloading of minor program data is designated, only programs selected based on a user's ID code is subjected to be processed.

The user interface waits until a signal is received via the radiocommunication unit STB5 (step SB6). If the received signal is not the power on/off switching signal (step SB7), an instruction represented by the received signal is executed (step SB8). The processing step SB6 through step SB8 is repeated until the power on/off switching signal is received. When the power on/off switching signal is received, the television receiver control unit STB4 turns off the power of the television receiver TV, and the image production unit STB3 terminates the user interface (step SB9).

### A-3-2: reserved program recording

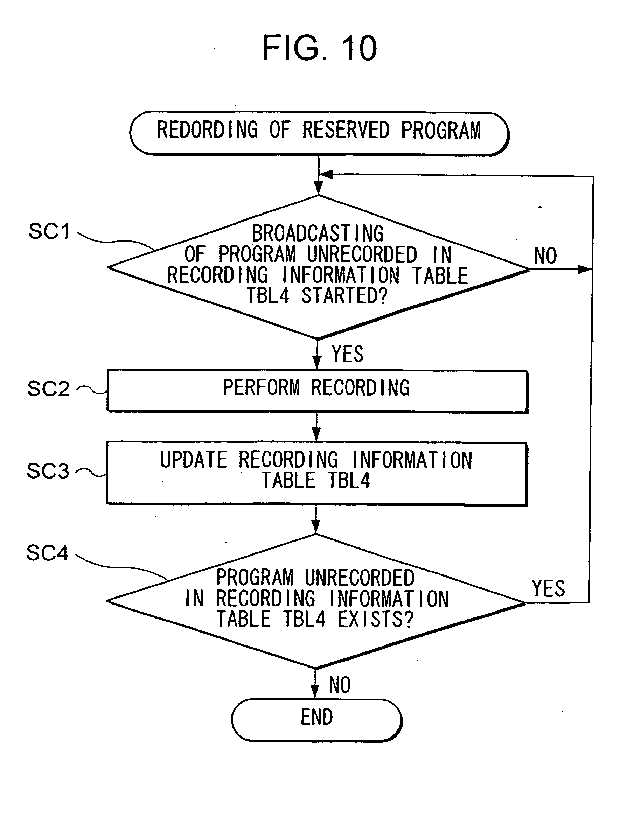

Fig. 10 is a flowchart describing a procedure of reserved program recording which is performed by the set-top box STB. The procedure described in Fig. 10 is performed independently of the above power supply on/off switching. The procedure is executed when a record corresponding to an unrecorded program is stored in the recording information table TBL4.

Specifically, first, the recording unit STB2 refers to a timer that is not shown, the recording information table TBL4, and a broadcast program list, and waits until broadcasting of an unrecorded program is started (step SC1). When broadcasting of the unrecorded program is started, the recording unit STB2 stores the major program data (and minor program data) of the program received by the broadcast receiver STB1 to record the program (step SC2).

When recording is completed, the recording unit STB2 stores a location of the newly stored major program data (and minor program data), in the specific field in the recording information table TBL4 (step SC3). Furthermore, the recording unit STB2 judges whether a record corresponding to an unrecorded program is stored in the recording information table TBL4 (step SC4). If the record is stored, control is returned to step SC1. If not, reserved program recording is terminated.

### A-3-3: recorded program reproduction

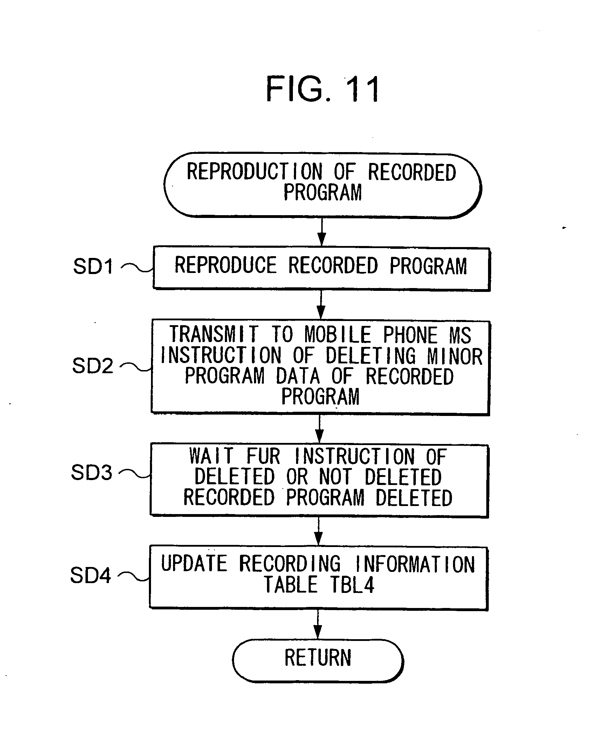

Fig. 11 is a flowchart describing a procedure of recorded program reproduction that is performed by the set-top box STB. It is noted that the procedure described in the drawing is one of the procedures performed at step SB8 in Fig. 9. The procedure is started when a user enters an instruction of reproduction of recorded program in the user interface.

First, the recording unit STB2 refers to the recording information table TBL4. The recording unit STB2 then reproduces major program data of a recorded program designated by a user (hereinafter object recorded program). The image production unit STB3 and television receiver control unit STB4 are activated so that the user can view the program (step SD1). After completing the reproduction of the object recorded program, the recording unit STB2 transmits an instruction of deletion of minor program data of the object recorded program and the program number to the mobile phone MS via the radiocommunication unit STB5 (step SD2).

After the reproduction of an object recorded program, the recording unit STB2 inquires via the user interface whether the user wants to delete the object recorded program (step SD3). The recording information table TBL4 is updated based on a reply sent from the mobile phone MS of the user, and the recorded program reproduction is terminated (step SD4). Specifically, when the reply sent from the mobile phone MS signifies "deletion," the recording unit STB2 deletes the record concerned from the recording information table TBL4. If the reply signifies "non deletion," nothing is performed.

Incidentally, the set-top box STB has the ability to delete by a manual operation, though the details will be omitted. In addition, when the last record of an object recorded program is deleted from the recording information table TBL4, the recording unit STB2 deletes the major program data and minor program data of the recorded program.

### A-3-4: minor program data downloading

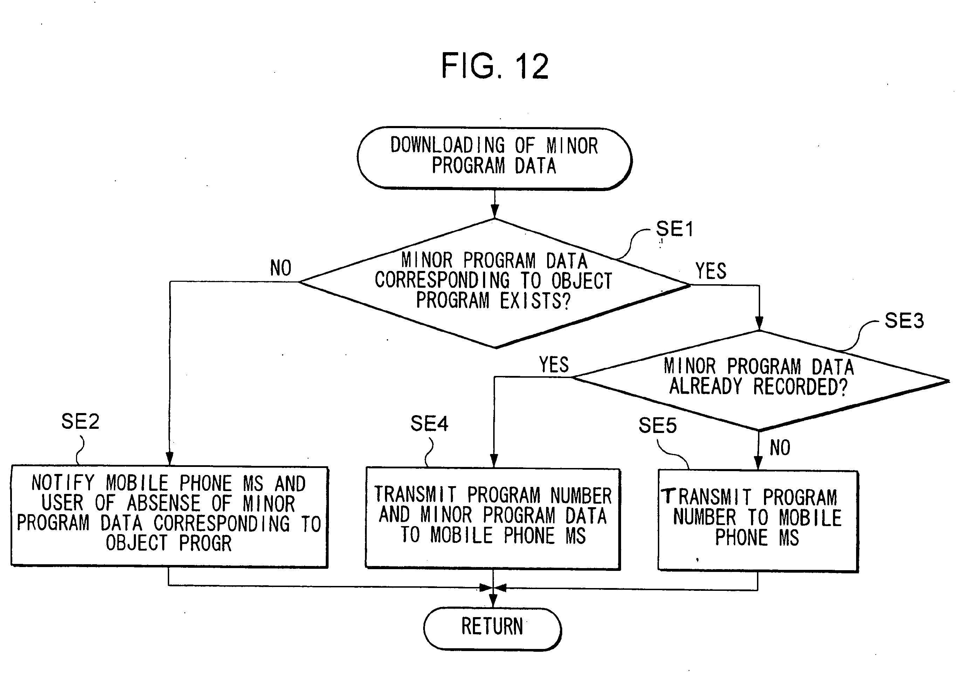

Fig. 12 is a flowchart describing a procedure of minor program data downloading performed by the set-top box STB. The procedure described in the drawing is one of the procedures performed at step SB8 in Fig. 9. The procedure is started when a user interactively enters a request for downloading of minor program data representing that the user wants to download minor program data of a desired program (hereinafter object program) from the set-top box STB to the mobile phone MS.

First, in response to the request for minor program data downloading, the recording unit STB2 refers to the recording information table TBL4 and the downloading request, to specify an object program of which minor program data should be downloaded. It is judged from the values specified in the minor program data field in the recording information table TBL4 whether minor program data concerning the object program is present in the broadcasting station BC (step SE1).

If the minor program data of the object program doesn't exist in the broadcasting station BC, the recording unit STB2 notifies the mobile phone MS via the radiocommunication unit STB5 of nonexistence of the minor program data of the object program in the broadcasting station BC (step SE2). If the minor program data of the object program is present in the broadcasting station BC, the recording unit STB2 judges whether the minor program data is stored in the recording unit STB2 (step SE3).

If the minor program data of the object program is stored, the recording unit STB2 transmits the program number and minor program data of the object program to the mobile phone MS via the radiocommunication unit STB5 (step SE4). If not stored, the recording unit STB2 transmits the program number of the object program to the mobile phone MS via the radiocommunication unit STB5, and terminates the procedure (step SE5).

### A-4: the configuration of the mobile phone MS

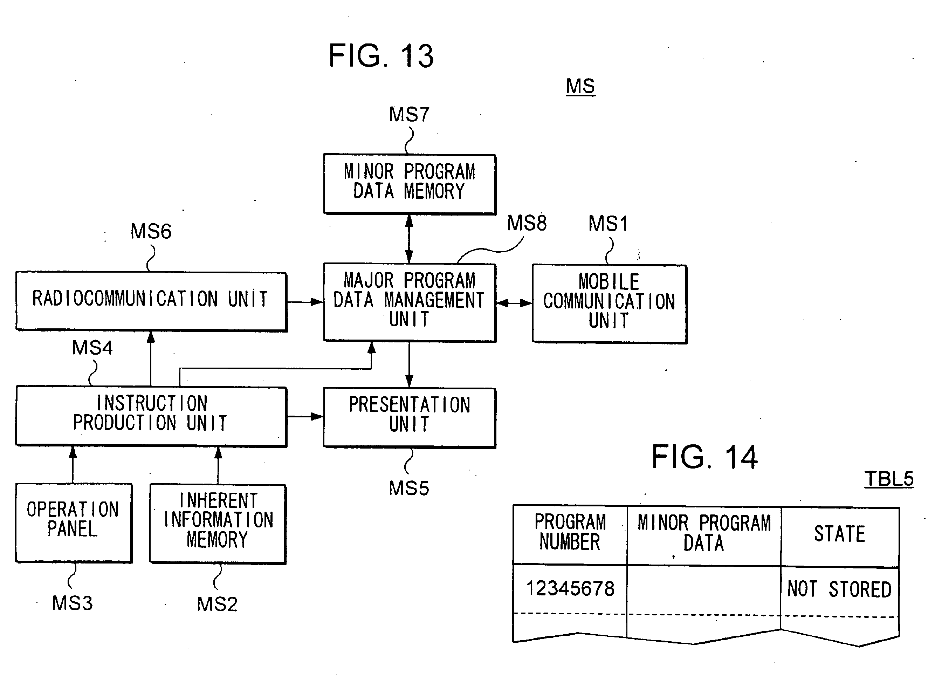

Fig. 13 is a block diagram showing the configuration of the mobile phone MS included in the program providing system in accordance with the present embodiment. In the drawing, MS1 denotes a mobile communication unit that performs radiocommunication with any base station BS accommodated by the mobile communication network MN. MS2 denotes an inherent information memory for storing an owner's ID code and attribute information, which cannot be rewritten. As for writing of attribute information, for example, a user himself/herself may enter attribute information in the inherent information memory MS2, or attribute information may be acquired from a database provided in the mobile communication network via the base station BS.

MS3 denotes an operator panel having a ten-key pad that is manipulated by a user. MS4 denotes an instruction production unit that produces an instruction responsively to a manipulation performed on the operator panel MS3. The instruction production unit MS4 appends an ID code to an instruction for the set-top box STB but does not append the ID code to an instruction for the components of the mobile phone MS. MS5 denotes a presentation unit that presents information to a user. The presentation unit MS5 presents information according to an instruction produced by the instruction production unit MS4.

MS6 denotes a radiocommunication unit for carrying out radiocommunication with the set-top box STB. The radiocommunication unit MS6 transmits an instruction for the set-top box STB produced by the instruction production unit MS4, to the set-top box STB, and receives information sent from the set-top box STB. MS7 denotes a minor program data memory in which the telephone number of the broadcasting station BC and minor program data are stored.

Fig. 14 is a conceptual diagram showing a minor program data table TBL5 stored in the minor program data memory MS7. As illustrated, the minor program data table TBL5 has a program number field in which program numbers are stored, a minor program data field in which minor program data is stored, and a distributed state field in which whether minor program data has been acquired is specified. Values permitted for the distributed state field are limited to a value representing "not stored" which signifies that minor program data concerned has not been stored in the table TBL5, and a value representing "stored" which signifies that minor program data concerned has been stored in the table TBL5.

MS8 denotes a minor program data management unit. The minor program data management unit MS8 manages the minor program data table TBL5 according to an instruction produced by the instruction production unit MS4 and information received by the radiocommunication unit MS6. The minor program data management unit MS8 performs the following processing. Namely, one (a) of the processing is minor program data downloading (which will be detailed later) that stores in the minor program table TBL5 a program number and minor program data received by the radiocommunication unit MS6. Another processing (b) is displaying a confirmation screen image, which is used to select deletion of minor program data or retention thereof in response to an instruction of deletion received by the radiocommunication unit MS6, on the presentation unit MS5. In this processing, if the user selects "deletion," a record corresponding to the minor program data is deleted from the minor program data table TBL5. Another processing (c) is to reproduce minor program data in response to an instruction sent from the instruction production unit MS4. Still another processing (d) is to delete a record from the minor program data table TBL5 in response to an instruction sent from the instruction production unit MS4. Still another processing (e) is to store the telephone number of the broadcasting station BC notified by the set-top box STB in the minor program data memory MS7. The other processing (f) is such that if a signal received from the set-top box STB represents information signifying that attribute information is not stored, an ID code and attribute information are transmitted to the set-top box STB.

Incidentally, the process of deleting a record corresponding to minor program data to be deleted from the minor program data table TBL5 in response to an instruction of deletion sent from the set-top box STB is performed only when the record is present in the minor program data table TBL5.

Next, the minor program data downloading will be described. The minor program data downloading performed in the mobile phone MS falls into downloading (STB) of minor program data from the set-top box STB and downloading (BC) of minor program data from the broadcasting station BC. The two kinds of downloading will be described below.

### A-4-1: minor program data downloading (STB)

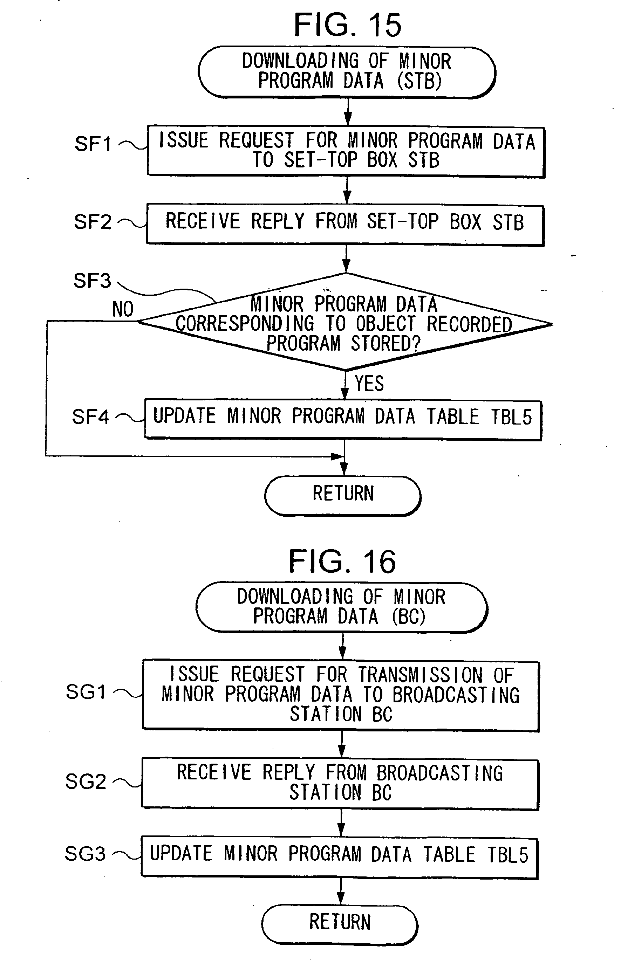

Fig. 15 is a flowchart describing a procedure of minor program data downloading (STB) performed by the mobile phone MS. As illustrated, first, the mobile phone MS transmits a request for downloading of minor program data to the set-top box STB (step SF1). Specifically, viewing the screen image displayed on the television receiver TV, a user manipulates the operator panel MS3 of the mobile phone MS for the downloading of minor program data of an object program. The instruction production unit MS4 produces an instruction responsively to the manipulation. The instruction production unit MS4 then appends an ID code to the instruction, and transmits the instruction to the set-top box STB via the radiocommunication unit MS6.

Next, the radiocommunication unit MS6 receives data which the set-top box STB has transmitted in response to the instruction (step SF2). The minor program data management unit MS8 judges whether the data received by the radiocommunication unit MS6 signifies that desired minor program data is absent from the broadcasting station BC (step SF3). If the data signifies that the desired minor program data is absent, minor program data downloading is terminated. If the desired minor program data is present, the minor program data table TBL5 is updated based on the data, and minor program data downloading is terminated (step SF4).

In other words, if the data received by the radiocommunication unit MS6 represents only a program number, the minor program management unit MS8 saves the program number in the program number field in the minor program data table TBL5 to create a new record. The minor program data management unit MS8 then stores the value representing "not stored" in the distributed state field to thus complete the record. Moreover, if the data received by the radiocommunication unit MS6 not only represents a program number but also contains minor program data, the minor program data management unit MS8 stores the program number in the program number field in the minor program data table TBL5 to create a new record. The minor program data management unit MS8 then stores the minor program data in the minor program field and the value representing "stored" in the distributed field to thus complete the record.

### A-4-2: minor program data downloading (BC)

Fig. 16 is a flowchart describing a procedure of minor program data downloading (BC) performed by the mobile phone MS. If the telephone number of the broadcasting station BC is stored in the minor program memory MS7 then, as illustrated, first, the mobile phone MS issues a request for downloading of minor program data to the broadcasting station BC via the mobile communication network MN (step SG1). Specifically, when a user uses the operator panel MS3 to perform a predetermined manipulation, the instruction production unit MS4 produces an instruction in response to the manipulation. The minor program data management unit MS8 acts according to the instruction. Namely, the minor program data management unit MS8 issues a request for downloading of minor program data via the mobile communication unit MS1 to the broadcasting station BC via the mobile communication unit MS1. At this time, the minor program data corresponds to one of records stored in the minor program data table TBL5 which has the value representing "not stored" in the distributed state field. The request contains a program number of a program whose minor program data is to be retrieved. Thereafter, the mobile communication unit MS1 receives a reply by the broadcasting station BC (step SG2). The minor program data management unit MS8 stores the minor program data in the minor program data field in a record specified with the program number. The minor program management unit MS8 then stores the value representing "stored" in the distributed state field (step SG3).

The minor program data management unit MS8 does not download minor program data that is already stored in the minor program data table TBL5, irrespective of whether the downloading is from the set-top box or the broadcasting station BC.

### B: Usage

Next, examples of usage of the program providing system having the above configuration will be described with reference mainly to Fig. 1. In the examples, the power of the television receiver TV is off in its initial state.

### B-1: real-time viewing

To begin with, a description will be made of an example of usage for viewing a broadcast program in real time. Herein, assume that a user's ID code and attribute information have not yet been stored in the set-top box STB.

First, a user who wants to view a program manipulates the mobile phone MS to turn on the power supply of the television receiver TV. At this time, a power on/off switching signal to be sent from the mobile phone MS to the set-top box STB represents the ID code of the user of the mobile phone MS. Since the ID code has not been stored in the attribute information table TBL3, the set-top box STB acquires the user's attribute information from the mobile phone MS and stores the attribute information in association with the ID code in the attribute information table TBL3.

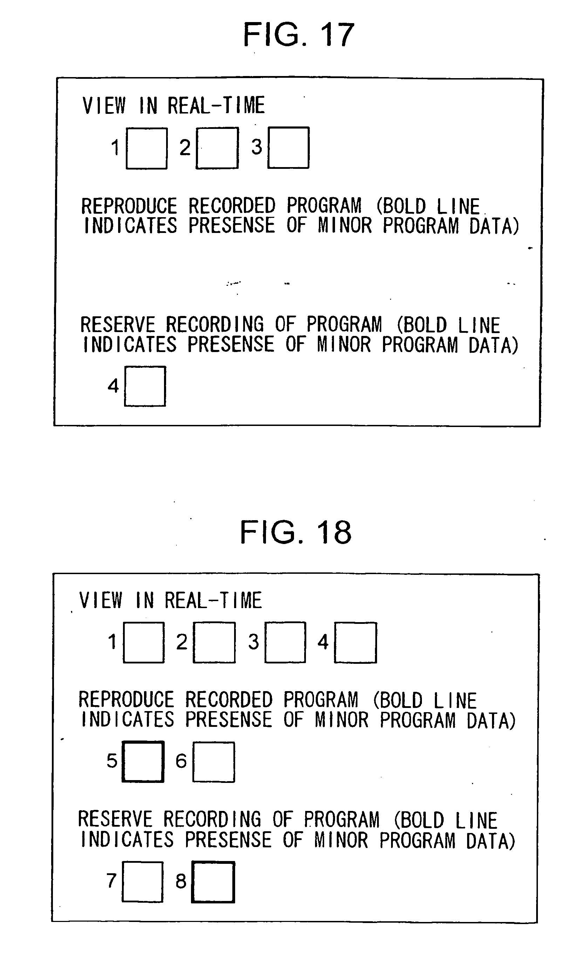

Thereafter, the set-top box STB produces a user interface according to the ID code and attribute information, a broadcast program list received in advance, and a current date and time. A screen image presented by the user interface is then displayed on the television receiver TV. Fig. 17 shows an example of the screen image. Referring to Fig. 17, a plurality of squares is associated with programs. In reality, information specifying a program (for example, a program number or title) is displayed within each of the squares.

For a better understanding, Fig. 18 shows an example of a screen image presented by a user interface produced for another user. The number of programs that can be viewed in real time is three in Fig. 17, while it is four in Fig. 18. The contents of the screen image vary depending on user's attribute information. Furthermore, the number of recorded programs that can be viewed is 0 in Fig. 17, while it is 2 in Fig. 18. Thus, the contents of the screen image vary depending on a user's ID code.

Viewing the screen image shown in Fig. 17, a user manipulates the mobile phone MS to select an object program which the user wants to view in real time. The set-top box STB then receives the major program data of the object program and reproduces the program in real time. In this way, the reproduced image and sounds of the object program are provided for the user through the television receiver TV. For selection of a program, a user uses the cursor control keys and the enter key on the mobile phone MS, but the ten-key pad may be used.

When viewing of the program ends, the screen image shown in Fig. 17 is redisplayed on the television receiver TV. However, It is noted that the contents of the screen image vary in real time with a change in the current date and time. The redisplayed screen image may not be completely identical to the one shown in Fig. 17.

### B-2: viewing of a recorded program

Next, a description will be made of an example of usage for viewing a recorded program. Herein, assume that a user's ID code and attribute information have already been stored in the set-top box STB.

First, a user who wants to view a recorded program manipulates the mobile phone MS to turn on the power of the television receiver TV. At this time, a power on/off switching signal sent from the mobile phone MS to the set-top box STB includes the user's ID code. The set-top box STB produces a user interface according to attribute information and the ID code. For example, the screen image shown in Fig. 18 is displayed on the television receiver TV. As shown, a recorded program associated with the ID code is displayed on the television receiver TV.

Viewing the screen image, the user manipulates the mobile phone MS to select an object recorded program (which may be referred to as an object record because a record stored in the recording information table TBL 4 is selected). The set-top box STB then reproduces the major program data of the object recorded program, and the television receiver TV provides the user with the reproduced picture and sounds. When viewing the recorded program comes to an end, the set-top box STB inquires of the user whether the object record should be deleted or retained. If the user selects "deletion" in response to the inquiry, the object record is deleted. The screen image similar to Fig. 18 is redisplayed on the television receiver TV. However, the screen image does not present the recorded program corresponding to the deleted object record, and is therefore not exactly identical to the screen image shown in Fig. 18.

When viewing of the recorded program comes to an end, the set-top box STB transmits an instruction of deleting the minor program data of the recorded program to the mobile phone MS. When the minor program data is stored in the memory in the mobile phone MS, the mobile phone MS inquires of the user whether the minor program data should be deleted. If the user selects "deletion" in response to the inquiry, the record corresponding to the minor program data is deleted from the minor program data table TBL5.

If a record specified with the same program number as the object record deleted from the recording information table TBL4 is absent from the table TBL5, the major program data (and minor program data) of the program having the program number is automatically deleted from the set-top box STB. A recorded program that a plurality of users wants to view is automatically deleted after the last user finishes viewing the program.

### B-3: reservation for recording

Next, a description will be made of an example of usage concerning reservation for recording. Herein, assume that a user's ID code and attribute information have already been stored in the memory in the set-top box STB.

First, a user who wants to manage reservations for recording manipulates the mobile phone MS to turn on the power of the television receiver TV. The set-top box STB retrieves a record, in which information on a location of the major program data is not stored, from among records stored correspondingly to the ID code in the recording information table TBL4. The set-top box STB then produces a user interface according to the user's ID code and attribute information. The user interface presents, on the television receiver TV, a screen image such as, for example, the one shown Fig. 18 that indicates programs which have been reserved for recording.

The user manipulates the mobile phone MS to learn the details of a program which is reserved for recording, to check the program, to additionally reserve a program for recording, to change a reserved program to another, or to delete a reserved program. When a program is additionally selected for reservation of recording or for suspension of reservation, the user selects the program from among programs available for reservation of recording. The programs that can be reserved for recording are presented by the user interface according to the user's attribute information, a broadcast program list, and a current date.

### B-4: viewing of minor program data

Next, a description will be made of an example of usage for viewing minor program data. Herein, a user's ID code and attribute information have already been stored in the set-top box STB. In addition, downloading of minor program data has been completed according to the procedure described in Fig. 15 and Fig. 16. A program enclosed with a bold line in the screen image shown in Fig. 17 and Fig. 18 has minor program data. When such program is selected, if a predetermined manipulation is performed, the minor program data is downloaded. In this way, downloading of minor program data for a program starts, which has a minor program data but the minor program data has not yet been downloaded.

Reproducing minor program data in the mobile phone MS is executed when a user performs a predetermined manipulation on the mobile phone MS. Specifically, a user interface enabling viewing of minor program data is internally produced by the mobile phone MS in response to a user's predetermined instruction. When the user enters an instruction in the user interface, minor program data present in the mobile phone MS is reproduced. The presentation unit MS5 then presents the reproduced picture or sounds. Thus, the user can learn, for example, the outline of a recorded program (or a program reserved for recording) at any time in any place.

### C: Supplement

According to the present embodiment, a mobile phone is adopted as the mobile terminal. The present invention is not limited to the mobile phone. Alternatively, a mobile personal computer, a Personal Digital Assistants (PDA), or any other terminal for communication with the set-top box will do. In the above embodiment, user's attribute information is stored and cannot be rewritten. Alternatively, the attribute information may be rewritten. As for a conceivable rewriting method, a user may directly iuput new information manually or new information may be downloaded from a database accommodated by the mobile communication network via the base station BS. Moreover, the attribute information may not be stored in the memory incorporated in the mobile phone. In this case, for example, every time the mobile phone MS communicates with the set-top box STB, a user may inuput information or information may be downloaded from the database accommodated by the mobile communication network via the base station BS.

It has been described that communication between the set-top box STB and mobile phone MS is radiocommunication. Needless to say, wire communication will also work.

Moreover, if the storage capacity offered by the mobile phone MS is large enough and the bandwidth offered by the mobile communication network MN is wide enough, program data downloaded to the mobile phone MS may be major program data.

For communication between the mobile phone MS and broadcasting station BC, the telephone number of the broadcasting station BC is transmitted to the mobile phone MS. The present invention is not limited to the telephone number. Alternatively, any information may be transmitted as long as the information helps establish a link between the broadcasting station BC and mobile phone MS.

Needless to say, a program may include music, text, and any other content of any format.

The user interface may have any specifications and the system may have any configuration. The present invention is not limited to the above embodiment.

Furthermore, if user's identification information is appended to all control signals sent from the mobile phone to the broadcast receiver, users could be changed during manipulation of the mobile phone.

Furthermore, if program data received by the broadcast receiver can be transferred to the mobile phone, a user can view a program at any time in any place. If such transfer is carried out via the mobile communication network, the user will benefit much more. In addition, if the size of program data to be received by the mobile phone is minimized, a communication band or the memory area in the mobile phone can be utilized more effectively.

Furthermore, if communication between the broadcast receiver and mobile phone is carried out by radio, the usefulness improves outstandingly.

## Claims

1. A program providing system, comprising:
a broadcast receiver (STB) for receiving program data broadcasted from a broadcasting station (BC) and providing a user with a program represented by the program data; and
a mobile phone accommodated by a mobile communication network (MN) and having a function of transmitting a control signal including identification information of a user;
wherein said broadcast receiver (STB) comprises:
a memory (STB7) for storing user attribute information in relation to identification information of one or more users;
a receiving unit (STB5) for receiving the control signal from said mobile phone (MS); and
a control unit (STB3, STB6) for reading from said memory (STB7) user attribute information corresponding to the identification information included in the control signal received by said receiving unit (STB5) from the mobile phone (MS), and receiving a request for provision of the program to a requester according to the user attribute information; wherein
said control unit (STB3, STB6) provides a user interface according to the user attribute information corresponding to the identification information included in the received control signal, the user interface serving for input of desired processing;
said program data comprises major program data being high-image quality and high-sound quality program data and minor program data representing at least the outline of a program; and
said broadcast receiver (STB) transmits the minor program data which is necessary for said mobile phone (MS) to receive program data from said broadcasting station (BC) to said mobile phone (MS); and
said mobile phone (MS) receives the minor program data sent from said broadcast receiver (STB), transmits a signal representing a request for transmission of major program data to said broadcasting station (BC) via said mobile communication network according to the minor program data, receives the major program data sent from said broadcasting station (BC) via said mobile communication network responsive to the request, and provides a user with a program represented by the major program data.

2. A program providing system according to claim 1, wherein said mobile phone (MS) attaches the identification information to all control signals for transmission to said broadcast receiver (STB).

3. A program providing system according to claim 1, wherein said broadcast receiver (STB) receives a broadcasting schedule, which includes attributes of the programs, broadcasted from the broadcasting station (BC);
and said control unit (STB3, STB6) does not allow a user to receive a program, of which attribute is not congruous with the user attribute information of the user.

4. A program providing system according to claim 1, wherein said broadcast receiver (STB) transmits program data received from said broadcasting station (BC) to said mobile phone (MS), and said mobile phone (MS) receives program data sent from said broadcast receiver (STB) to provide a user with a program represented by the program data.

5. A program providing system according to claim 1, wherein the amount of major program data received by said mobile phone (MS) is smaller than that received by said broadcast receiver (STB) receives from said broadcasting station (BC).

6. A mobile phone (MS) accommodated by a mobile communication network (MN), the mobile phone comprising a mobile communication unit (MS1) for performing radio communication with a mobile communication network (MN) and a radiocommunication unit (MS6) for carrying out radiocommunication with a broadcast receiver (STB), wherein:
said mobile phone (MS) transmits a control signal representing a request for provision of a program and including identification information of a user, to a broadcast receiver (STB) which receives program data broadcasted from a broadcasting station (BC) and provides a user with a program represented by the program data according to user attribute information; receives the program data sent from said broadcast receiver (STB); and provides a user with a program represented by the program data and a user interface according to user attribute information corresponding to the identification information included in the control signal, the user interface serving for input of desired processing; and
said program data comprises major program data being high-image quality and high-sound quality program data and minor program data representing at least the outline of a program; and
said mobile phone (MS) receives minor program data which is necessary to receive program data from said broadcast receiver (STB), transmits to said broadcasting station (BC) a signal representing transmission of program data according to the minor program data via said mobile communication network, receives major program data sent from said broadcasting station (BC) via said mobile communication network responsive to the request, and provides a user with a program represented by the major program data.

## Patentansprüche

1. Programmbereitstellsystem, welches umfasst:
einen Broadcast-Empfänger (STB), um Programmdaten zu empfangen, welche von einer Broadcast-Station (BC) ausgestrahlt werden, und um einem Benutzer ein Programm bereitzustellen, welches durch die Programmdaten repräsentiert wird; und
ein Mobiltelefon, welches in einem Mobilkommunikationsnetzwerk (MN) eingebunden ist, und eine Funktion zum Übertragen eines Steuersignals hat, welches Identifikationsinformation eines Benutzers beinhaltet;
wobei der Broadcast-Empfänger (STB) umfasst:
einen Speicher (STB7) zum Speichern von Benutzerattributsinformation in Bezug auf Identifikationsinformation von einem oder mehreren Benutzern;
eine Empfängereinheit (STB5) zum Empfangen des Steuersignals von dem Mobiltelefon (MS); und
eine Steuereinheit (STB3, STB6), um aus dem Speicher (STB7) Benutzerattributsinformation auszulesen, welche der Identifikationsinformation entspricht, welche in dem Steuersignal beinhaltet ist, welches von der Empfängereinheit (STB5) von dem Mobiltelefon (MS) empfangen wird, und um eine Aufforderung zum Bereitstellen des Programms an einen Aufforderer zu empfangen, gemäß der Benutzerattributsinformation; wobei die Steuereinheit (STB3, STB6) eine Benutzerschnittstelle gemäß der Benutzerattributsinformation bereitstellt, welche der Identifikationsinformation entspricht, welche in dem empfangenen Steuersignal beinhaltet ist, wobei die Benutzerschnittstelle der Eingabe einer gewünschten Verarbeitung dient;
die Programmdaten Hauptprogrammdaten umfassen, welche Programmdaten mit hoher Bildqualität und hoher Tonqualität sind und Nebenprogrammdaten, welche wenigstens den Abriss eines Programms repräsentieren; und
der Broadcast-Empfänger (STB) die Nebenprogrammdaten überträgt, welche von dem Mobiltelefon (MS) benötigt werden, damit das Mobiltelefon (MS) Programmdaten von der Broadcast-Station (BC) empfängt; und
das Mobiltelefon (MS) die Nebenprogrammdaten, welche von dem Broadcast-Empfänger (STB) gesendet werden, empfängt, ein Signal, welches eine Aufforderung zur Übertragung von Hauptprogrammdaten repräsentiert, an die Broadcast-Station (BC) über das Mobilkommunikationsnetzwerk überträgt, gemäß den Nebenprogrammdaten, die Hauptprogrammdaten empfängt, welche von der Broadcast-Station (BC) ansprechend auf die Aufforderung über das Mobilkommunikationsnetzwerk gesendet werden, und einem Benutzer ein Programm, welches von den Hauptprogrammdaten repräsentiert wird, bereitstellt.

2. Programmbereitstellsystem nach Anspruch 1, wobei das Mobiltelefon (MS) die Identifikationsinformation an alle Steuersignale zur Übertragung an den Broadcast-Empfänger (STB) anfügt.

3. Programmbereitstellsystem nach Anspruch 1, wobei der Broadcast-Empfänger (STB) einen Sendeplan empfängt, welcher Attribute der Programme beinhaltet, welche von der Broadcast-Station (BC) ausgestrahlt werden;
und die Steuereinheit (STB3, STB6) einem Benutzer nicht erlaubt, ein Programm zu empfangen, dessen Attribut nicht mit der Benutzerattributsinformation des Benutzers übereinstimmt.

4. Programmbereitstellsystem nach Anspruch 1, wobei der Broadcast-Empfänger (STB) Programmdaten, welche von der Broadcast-Station (BC) empfangen werden, an das Mobiltelefon (MS) überträgt, und das Mobiltelefon (MS) Programmdaten empfängt, welche von dem Broadcast-Empfänger (STB) gesendet werden, um einem Benutzer ein Programm bereitzustellen, welches durch die Programmdaten repräsentiert wird.

5. Programmbereitstellsystem nach Anspruch 1, wobei die Menge an Hauptprogrammdaten, welche von dem Mobiltelefon (MS) empfangen werden, kleiner ist als die, welche von dem Broadcast-Empfänger (STB) von der Broadcast-Station (BC) empfangen wird.

6. Mobiltelefon (MS), welches in einem
Mobilkommunikationsnetzwerk (MN) eingebunden ist, wobei das Mobiltelefon eine Mobilkommunikations-Einheit (MS1) umfasst, um Funkkommunikation mit einem Mobilkommunikationsnetzwerk (MN) auszuführen, und eine Funkkommunikations-Einheit (MS6), um Funkkommunikation mit einem Broadcast-Empfänger (STB) aufzuführen, wobei:
das Mobiltelefon (MS) ein Steuersignal, welches eine Aufforderung zum Bereitstellen eines Programms repräsentiert und Identifikationsinformation eines Benutzers beinhaltet, an den Broadcast-Empfänger (STB) überträgt, welcher Programmdaten empfängt, welche von einer Broadcast-Station (BC) ausgestrahlt werden und einem Benutzer Programm bereitstellt, welches von den Programmdaten repräsentiert wird, gemäß Benutzerattributsinformation; die Programmdaten, welche von dem Broadcast-Empfänger (STB) gesendet werden, empfängt; und einem Benutzer ein Programm bereitstellt, welches von den Programmdaten repräsentiert wird und eine Benutzerschnittstelle gemäß Benutzerattributsinformation, welche der Identifikationsinformation entspricht, welche in dem Steuersignal beinhaltet ist, wobei die Benutzerschnittstelle der Eingabe von gewünschter Verarbeitung dient; und
die Programmdaten Hauptprogrammdaten umfassen, welche Programmdaten von hoher Bildqualität und hoher Tonqualität sind und Nebenprogrammdaten, welche wenigstens den Abriss eines Programms repräsentieren; und
das Mobiltelefon (MS) Nebenprogrammdaten empfängt, welche benötigt werden, um Programmdaten von dem Broadcast-Empfänger (STB) zu empfangen, an der Broadcast-Station (BC) über das Mobilkommunikationsnetzwerk ein Signal überträgt, welches die Übertragung von Programmdaten gemäß den Nebenprogrammdaten repräsentiert,
Hauptprogrammdaten empfängt, welche von der Broadcast-Station (BC) ansprechend auf die Aufforderung über das Mobilkommunikationsnetzwerk gesendet werden, und einem Benutzer ein Programm bereitstellt, welches von den Hauptprogrammdaten repräsentiert wird.

## Revendications

1. Système de fourniture de programme, comprenant :
un récepteur de radiodiffusion (STB) pour recevoir des données de programme radiodiffusées à partir d'une station de radiodiffusion (BC) et pour fournir à un utilisateur un programme représenté par les données de programme ; et
un téléphone mobile hébergé par un réseau de communication mobile (MN) et ayant une fonction d'émettre un signal de commande incluant des informations d'identification d'un utilisateur ;
dans lequel ledit récepteur de radiodiffusion (STB) comprend :
une mémoire (STB7) pour stocker des informations d'attribut d'utilisateur en relation avec des informations d'identification d'un ou plusieurs utilisateurs ;
une unité de réception (STB5) pour recevoir le signal de commande en provenance dudit téléphone mobile (MS) ; et
une unité de commande (STB3, STB6) pour lire à partir de ladite mémoire (STB7) des informations d'attribut d'utilisateur correspondant aux informations d'identification incluses dans le signal de commande reçu par ladite unité de réception (STB5) en provenance du téléphone mobile (MS), et recevoir une demande de fourniture du programme à un dispositif de demande selon les informations d'attribut d'utilisateur ; dans lequel
ladite unité de commande (STB3, STB6) fournit une interface utilisateur selon les informations d'attribut d'utilisateur correspondant aux informations d'identification incluses dans le signal de commande reçu, l'interface utilisateur servant à entrer un traitement souhaité ;
lesdites données de programme comprennent des données de programme principales étant des données de programme de qualité d'image élevée et de qualité de son élevée et des données de programme secondaires représentant au moins le résumé d'un programme ; et
ledit récepteur de radiodiffusion (STB) émet les données de programme secondaires qui sont nécessaires pour que ledit téléphone mobile (MS) reçoive des données de programme de ladite station de radiodiffusion (BC) à destination dudit téléphone mobile (MS) ; et
ledit téléphone mobile (MS) reçoit les données de programme secondaires envoyées à partir dudit récepteur de radiodiffusion (STB), émet un signal représentant une demande d'émission de données de programme principales vers ladite station de radiodiffusion (BC) par l'intermédiaire dudit réseau de communication mobile selon les données de programme secondaires, reçoit les données de programme principales envoyées à partir de ladite station de radiodiffusion (BC) par l'intermédiaire dudit réseau de communication mobile en réponse à la demande, et fournit à un utilisateur un programme représenté par les données de programme principales.

2. Système de fourniture de programme selon la revendication 1, dans lequel ledit téléphone mobile (MS) attache les informations d'identification à tous les signaux de commande pour émission vers ledit récepteur de radiodiffusion (STB).

3. Système de fourniture de programme selon la revendication 1, dans lequel ledit récepteur de radiodiffusion (STB) reçoit un planning de radiodiffusion, qui inclut des attributs des programmes, radiodiffusé à partir de la station de radiodiffusion (BC) ;
et ladite unité de commande (STB3, STB6) ne permet pas à un utilisateur de recevoir un programme, dont l'attribut n'est pas conforme aux informations d'attribut d'utilisateur de l'utilisateur.

4. Système de fourniture de programme selon la revendication 1, dans lequel ledit récepteur de radiodiffusion (STB) émet des données de programme reçues de ladite station de radiodiffusion (BC) vers ledit téléphone mobile (MS), et ledit téléphone mobile (MS) reçoit des données de programme envoyées dudit récepteur de radiodiffusion (STB) pour fournir à un utilisateur un programme représenté par les données de programme .

5. Système de fourniture de programme selon la revendication 1, dans lequel la quantité de données de programme principales reçues par ledit téléphone mobile (MS) est plus petite que celle reçue par ledit récepteur de radiodiffusion (STB) qui reçoit à partir de ladite station de radiodiffusion (BC).

6. Téléphone mobile (MS) hébergé par un réseau de communication mobile (MN), le téléphone mobile comprenant une unité de communication mobile (M51) pour effectuer une radiocommunication avec un réseau de communication mobile (MN) et une unité de radiocommunication (M86) pour exécuter une radiocommunication avec un récepteur de radiodiffusion (STB), dans lequel :
ledit téléphone mobile (MS) émet un signal de commande représentant une demande de fourniture d'un programme et incluant des informations d'identification d'un utilisateur, vers le récepteur de radiodiffusion (STB) qui reçoit des données de programme radiodiffusées d'une station de radiodiffusion (BC) et fournit à un utilisateur un programme représenté par les données de programme selon des informations d'attribut d'utilisateur ; reçoit les données de programme envoyées dudit récepteur de radiodiffusion (STB) ; et fournit à un utilisateur un programme représenté par les données de programme et une interface utilisateur selon des informations d'attribut d'utilisateur correspondant aux informations d'identification incluses dans le signal de commande, l'interface utilisateur servant à entrer un traitement souhaité ; et
lesdites données de programme comprennent des données de programme principales étant des données de programme de qualité d'image élevée et de qualité de son élevée et des données de programme secondaires représentant au moins le résumé d'un programme ; et
ledit téléphone mobile (MS) reçoit des données de programme secondaires qui sont nécessaires pour recevoir des données de programme dudit récepteur de radiodiffusion (STB), émet vers ladite station de radiodiffusion (BC) un signal représentant une émission de données de programme selon les données de programme secondaires par l'intermédiaire dudit réseau de communication mobile, reçoit des données de programme principales envoyées de ladite station de radiodiffusion (BC) par l'intermédiaire dudit réseau de communication mobile en réponse à la demande, et fournit à un utilisateur un programme représenté par les données de programme principales.
